# EUROPEAN PATENT APPLICATION

(11) **EP 2 272 686 A1**
(43) Date of publication of application: **12.01.2011**
(21) Application number: 10250670.6
(22) Date of filing: 31.03.2010
(51) Int. Cl.: B60B 17/00, C22C 38/04, C22C 38/22

(54) **Railway wheel alloy**

(30) Priority: 23.06.2009 US 456764
(71) Applicant: Amsted Rail Company, Inc., Granite City, IL 62040 (US)
(72) Inventor: Shriley, Mark S., Geneva, Illinois 60134 (US)
(74) Representative: Ramsay, Laura Anne

(57) **Abstract**

Such alloy comprises a steel railway wheel alloy, comprising, in weight percentage, carbon 0.50-0.80, manganese 0.50-1.00, silicon less than 0.85, chromium 0.10-0.70, molybdenum less than 0.20, phosphorus less than 0.05, sulfur less than 0.05, with the balance essentially iron.

## Description

### BACKGROUND OF THE INVENTION

The present invention provides a railway wheel alloy and, more particularly, a railway wheel alloy particularly adapted for use in the manufacture of cast steel railway wheels.

In the manufacture of cast steel railway wheels, it is desirable to utilize a steel alloy that is able to be hardened to provide adequate wear resistance, while also providing adequate resistance to thermal cracking. The mechanical strength of steel can be improved by the addition of alloying elements such as chromium, manganese, and molybdenum. However, such alloy additions must be carefully chosen to minimize increased costs as well as balancing the possible degradation of the improved properties that desirable amounts of such alloys add.

Thermal-mechanical shelling and spalling are the two predominant causes of tread damage found on railway wheels in service. This tread damage results in the significant levels of pre-mature wheel removal from service. The phenomenon of thermal-mechanical shelling is generally experienced in the heavy-haul coal, ore and grain services, where the environment is conducive to this type of failure. The contributing factors related to these services include high normal forces when the railcars are loaded, and when the wheels are subject to long and steep grades in mountainous regions. The normal forces from railcar loading are, for the railroads, ideally at the maximum allowable for the wheel designs. Spalling involves the transformation of tread surface material into the brittle martensite phase. Sliding of the wheel on the rail causes this material transformation. The present alloy development is aimed to reduce or eliminate the damage caused by thermal-mechanical abuse or sliding of the wheel on the rail.

Three components of thermal-mechanical shelling together allow the tread damage to occur. The mechanical portion of the process is a rolling contact fatigue. The rolling of the wheel provides the cyclical stresses to drive the progressive failure. The thermal component, introduced by the drag braking, not only contributes thermal stresses in the wheel but also reduces the material's ability to resist mechanical loading through reduced material strength at elevated temperature. The final component of this progressive failure is time-at-temperature. The longer the wheel is at an elevated temperature, the greater the number of the loading cycles, which are needed to initiate and propagate the cracks, will occur.

It should also be understood that the desirable alloy of the present invention can be utilized not only in cast steel wheels, but also in other forms of manufacture of railway wheels including forging.

Accordingly, it is an object of the present invention to provide an alloy particularly adapted for the manufacture of railway wheels.

It is also an object of the present invention to provide an alloy particularly adapted for the manufacture of cast steel railway wheels having improved hardness and, accordingly, wear resistance, plus resistance to thermal cracking.

### SUMMARY OF THE INVENTION

According to a first aspect of the present invention there is provided a steel railway wheel alloy, comprising, in weight percentage, carbon 0.50-0.80, manganese 0.50-1.00, silicon less than 0.85, chromium 0.10-0.70, molybdenum less than 0.20, with the balance essentially iron.

According to a second aspect of the present invention there is provided a steel railway wheel alloy, comprising, in weight percentage, carbon 0.50-0.80, manganese 0.50-1.00, silicon less than 0.85, chromium 0.10-0.70, molybdenum less than 0.20, phosphorus less than 0.05, sulfur less than 0.05, with the balance essentially iron.

According to a third aspect of the present invention there is provided a steel railway wheel, comprising, in weight percentage, carbon 0.50-0.80, manganese 0.50-1.00, silicon less than 0.85, chromium 0.10-0.70, molybdenum less than 0.20, with the balance essentially iron.

One specific alloy is directed at the affects of thermal-mechanical shelling. This is chromium-silicon-molybdenum alloy. This alloy has shown great promise in heavy haul service. Molybdenum and chromium increase the high temperature properties of the steel. These improved high temperature properties will increase the minimum temperature at which fatigue cracks will initiate and therefore decreases the time the tread material is above the critical temperature. By reducing these two components of fatigue and time-at-temperature, fewer cracks will initiate and propagate in the tread. All three alloying elements increase the steels yield and tensile strength. This will reduce the subsequent propagation of any cracks that do initiate at elevated temperatures while the wheel is rolling under normal operational conditions. An additional benefit of the molybdenum and chromium alloys is improved wear resistance which will lengthen the normal operational life of the wheel.

### DETAILED DESCRIPTION

Railway wheels with an alloy as set forth in the Examples below were cast and subjected to various performance field tests.

### EXAMPLE 1

Railway wheels were cast with the following alloy composition, in percentage by weight: carbon 0.57-0.87, manganese 0.50-1.00, silicon less than 0.85, chromium 0.10-0.70 and molybdenum less than 0.20.

Based on these field test results and supporting laboratory tests, the alloys of the present invention are more resistant to shell tread condition than the normal carbon type steel. In fact, in normal freight car service, mileage performance of the cast steel wheel in accordance with the present invention is seen to approach 400,000 miles.

### EXAMPLE 2

Railway wheels were cast with the following alloy composition, in percentage by weight: carbon 0.57-0.87, manganese 0.50-1.00, silicon less than 0.85, chromium 0.10-0.70, molybdenum less than 0.20, phosphorus less than 0.05 and sulfur less than 0.05.

Based on these field test results and supporting laboratory tests, the alloys of the present invention are more resistant to shell tread condition than the normal carbon type steel. In fact, in normal freight car service, mileage performance of the cast steel wheel in accordance with the present invention is seen to approach 400,000 miles.

## Claims

1. A steel railway wheel alloy, comprising, in weight percentage, carbon 0.50-0.80, manganese 0.50-1.00, silicon less than0.85 chromium 0.10-0.70, molybdenum less than 0.20, with the balance essentially iron.

2. A steel railway wheel alloy, comprising, in weight percentage, carbon 0.50-0.80, manganese 0.50-1.00, silicon less than 0.85, chromium 0.10-0.70, molybdenum less than 0.20, phosphorus less than 0.05, sulfur less than 0.05, with the balance essentially iron.

3. A steel railway wheel, comprising, in weight percentage, carbon 0.50-0.80, manganese 0.50-1.00, silicon less than 0.85, chromium 0.10-0.70, molybdenum less than 0.20, with the balance essentially iron.
